# EUROPEAN PATENT APPLICATION

(11) **EP 3 422 169 A1**
(43) Date of publication of application: **02.01.2019**
(21) Application number: 17178798.9
(22) Date of filing: 29.06.2017
(51) Int. Cl.: G06F 3/0488, G06F 3/041, G06F 3/0489

(54) **APPARATUS AND METHOD FOR OPERATING AN ELECTRONIC DEVICE**

(71) Applicant: Vestel Elektronik Sanayi ve Ticaret A.S., 45030 Manisa (TR)
(72) Inventor: ÇUBUKÇU, Baran, 45030 Manisa (TR)
(74) Representative: Flint, Adam

(57) **Abstract**

Apparatus for operating an electronic device (1) includes a touch screen (2) having a display (6) for producing an image display, and an input surface (5) for receiving touch input from a user. The display (6) has adjustable display settings. The input surface (5) is divided into a plurality of regions (7). A data storage (9) is provided for storing information on associations between each of the plurality of regions (7) of the input surface (5) and a particular area of the display (6). A controller (10) is provided. The controller (10) provides an adjustment of the display settings of an area of the display associated with at least one region of the input surface (5) if the at least one region of the input surface (5) has received more touches from a user than a predetermined threshold count. A method for operating an electronic device (1) is also disclosed.

## Description

### Technical Field

The present disclosure relates to an apparatus and method for operating an electronic device.

### Background

Electronic devices, such as mobile phones, tablet computers etc., typically include a touch screen having an input surface and a display. The input surface operates as an input device and receives input from a user touching the touch screen with, for example, their finger or thumb. The display operates as an output device and produces an image display to allow the touch screen to show information and graphics etc. to a user. A touch screen can therefore operate as both an input device and an output device at the same time, which advantageously enables a user to interact directly with what is shown on the display.

### Summary

According to a first aspect disclosed herein, there is provided apparatus for operating an electronic device, the apparatus comprising: a touch screen comprising: a display for producing an image display; and an input surface for receiving touch input from a user, the display having adjustable display settings and the input surface being divided into a plurality of regions; a data storage storing information on associations between each of the plurality of regions of the input surface and a particular area of the display; and a controller configured to: count touches that at least one region of the input surface receives from a user; compare the touches that the at least one region of the input surface receives from a user with a predetermined threshold count; and, when the at least one region of the input surface has received more touches than the predetermined threshold count, provide an adjustment of the display settings of an area of the display associated with the at least one region of the input surface.

This allows the controller to adjust the display/graphics settings of the area of the display beneath a fingerprint mark left on the touch screen by a user, in order to make the area of the display beneath the dirty fingerprint mark more distinguishable to a user, i.e. to make the fingerprint mark less noticeable to the user. As well as being convenient for many users, this may allow for better or increased use of touch screens in locations, industries and environments where dirty fingerprints marks are common. The controller determines where the user has touched the touch screen and only changes the display settings of areas of the display associated with regions of the input surface that have been touched more times than the predetermined threshold count rather than for the whole display.

In an example, the display settings comprise one or more of brightness, contrast and colour of the display screen.

In an example, the controller is configured to: compare the touches that at least one region of the input surface receives from a user with a second predetermined threshold; and when the at least one region of the input surface has received more touches than the second predetermined threshold count, which is more than the first predetermined threshold count, provide a second adjustment of the display settings of an area of the display associated with the at least one region of the input surface.

In an example, the second adjustment provides a greater adjustment of the display settings compared to the first adjustment, relative to non-adjusted display settings.

In an example, the controller is configured to: compare a proportion of the plurality of regions of the input surface that have been touched by a user in a time period with a predetermined threshold proportion and a predetermined threshold time period; and, when the proportion of the plurality of regions of the input surface that have been touched by a user is more than the predetermined threshold proportion, and the time period is less than the predetermined threshold time period, reset the display settings of the display to non-adjusted display settings. This can be taken to indicate that a user has cleaned the touch screen of the electronic device.

In an example, the controller is configured to: reset the display settings of the display to non-adjusted display settings in response to user input.

In an example, the controller is configured to: detect the pressure of a touch received by at least one region of the input surface from a user; and modify the extent of the second adjustment based on the detected pressure.

In an example, the predetermined threshold count (which may be one or both of the first and second predetermined threshold counts described above) is adjustable by a user.

According to a second aspect disclosed herein, there is provided an electronic device comprising apparatus as described above.

According to a third aspect disclosed herein, there is provided a method of operating an electronic device comprising a touch screen having a display for producing an image display and an input surface for receiving touch input from a user, the method comprising: counting touches that at least one region of the input surface receives from a user; comparing the touches that the at least one region of the input surface receives from a user with a predetermined threshold count; and providing an adjustment of display settings of an area of the display associated with the at least one region of the input surface when the at least one region of the input surface has received more touches than the predetermined threshold count.

In an example, the display settings comprise one or more of brightness, contrast and colour of the display screen.

In an example, the method comprises: comparing the touches that at least one region of the input surface receives from a user with a second predetermined threshold; and providing a second adjustment of the display settings of an area of the display associated with the at least one region of the input surface when the at least one region of the input surface has received more touches than the second predetermined threshold count, which is more than the first predetermined threshold count.

In an example, the second adjustment provides a greater adjustment of the display settings compared to the first adjustment, relative to non-adjusted display settings.

In an example, the method comprises: comparing a proportion of a plurality of regions of the input surface that have been touched by a user in a time period with a predetermined threshold proportion and a predetermined threshold time period; and resetting the display settings of the display to non-adjusted display settings when the proportion of the plurality of regions of the input surface that have been touched by a user is more than the predetermined threshold proportion, and the time period is less than the predetermined threshold time period. This can be taken to indicate that a user has cleaned the touch screen of the electronic device.

In an example, the method comprises: resetting the display settings of the display to non-adjusted display settings in response to user input.

In an example, the method comprises: detecting the pressure of a touch received by at least one region of the input surface from a user; and modifying the extent of the adjustment based on the detected pressure.

In an example, the predetermined threshold count is adjustable by a user.

### Brief Description of the Drawings

To assist understanding of the present disclosure and to show how embodiments may be put into effect, reference is made by way of example to the accompanying drawings in which:
Figure 1 shows schematically a front face of an example of an electronic device including a touch screen;
Figure 2 shows schematically a cross section of the electronic device shown in Figure 1, the cross-section taken across line "A-A" of Figure 1;
Figure 3 shows schematically a front face of the electronic device shown in Figure 1;
Figure 4 shows schematically a front face of the electronic device shown in Figure 1; and
Figure 5 shows a flow diagram illustrating an example of a method of operating the touch screen of the electronic device shown in Figures 1-4.

### Detailed Description

Electronic devices, such as mobile phones, tablet computers etc., typically include a touch screen having an input surface and a display. The input surface operates as an input device and receives input from a user touching the touch screen with, for example, their finger or thumb. The display operates as an output device and produces an image display to allow the touch screen to show information and graphics etc. to a user. A touch screen can therefore operate as both an input device and an output device at the same time, which advantageously enables a user to interact directly with what is shown on the display and avoids the need for a separate keyboard on the device.

However, the combination of an input device and an output device may result in problems. For example, when a touch screen is used, it is common for fingerprints to be left on the touch screen. This is a common problem, which is worse in some environments, industries or locations, as a user may leave dirty or greasy fingerprint marks on areas of the touched surface of the touch screen. This may make it difficult for a user to read the associated areas of the display. This reduces the overall usefulness of a touch screen.

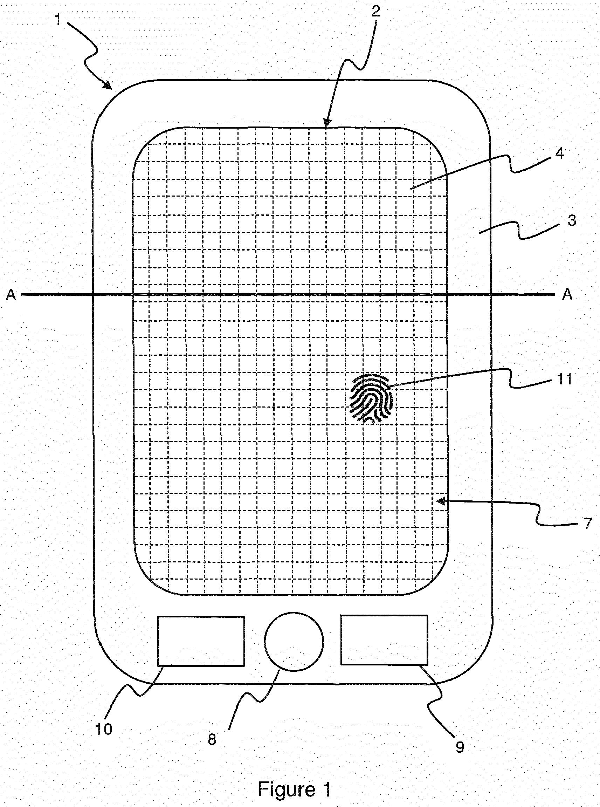

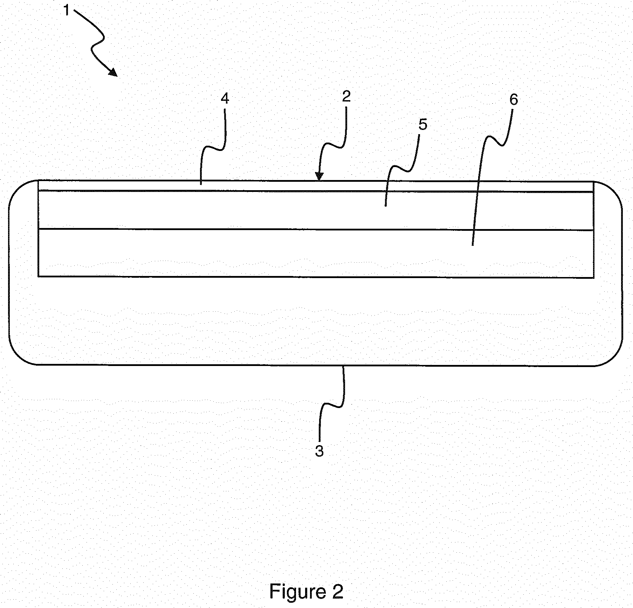

Referring now to Figures 1 and 2, there is shown schematically an example of an electronic device 1 including a touch screen 2 and a housing 3.

The touch screen 2 has a number of layers. In this example, referring particularly to Figure 2, the touch screen 2 includes a cover 4, an input surface 5, and a display 6. The layers of the touch screen 2 are arranged so that the touch screen 2 can operate as an input device and an output device at the same time. Specifically, the layers are arranged so that the input surface 5 can receive inputs from a user in the form of touch/contact, and so that the display 6 can produce an image display visible to the user. This allows a user to use the input surface 5 to interact directly with what is shown on the display 6. In this example, the cover 4 overlies the input surface 5, and the input surface 5 overlies the display 6. Other layer configurations are possible. Indeed, in other examples, the touch screen 2 may also include additional layers.

The cover 4 is constructed and arranged to protect the more delicate internal components (e.g. the input surface 5 and the display 6). The cover 4 is therefore formed from a strong, resistant material, such as toughened glass.

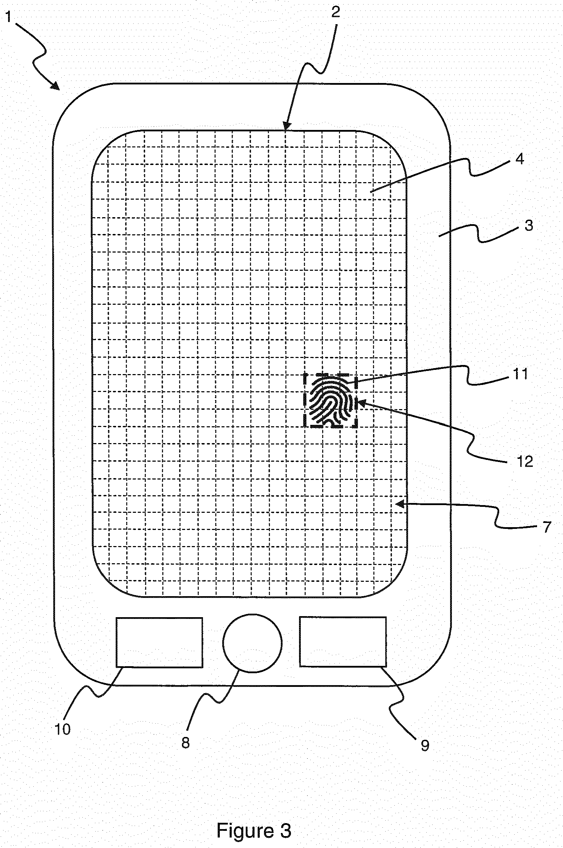

The input surface 5 is an input device. The whole of a front face of the input surface 5 is (at least notionally) divided into a plurality of regions 7 for allowing identification of the particular area of the input surface 5 that it is touched by a user. To assist in the understanding of the operation of this example, the lines dividing each of the plurality of regions 7 are visible in Figures 1, 3 and 4. However, it will be understood that in other examples the lines dividing each of the plurality of regions 7 are invisible. In this example, each of the plurality of regions 7 has a square shape. Indeed, in this example, each of the plurality of regions is the same shape. Other configurations are possible. For example, in other examples, the plurality of regions 7 may have a different shape, such as triangular. The plurality of regions 7 may be nonuniform. In an example, only part of the front face of the input surface 5 may be divided into a plurality of regions 7.

The display 6 is an output device. In normal use, the display 6 produces an image display on its front face, which is visible to a user. In this example, the display 6 is an organic light-emitting diode (OLED) display screen. In other examples, the display 6 may be a liquid-crystal display (LCD) screen or a plasma display screen or some other type of display screen. The display 6 has a plurality of reconfigurable display settings (or graphics settings) which can be adjusted to affect the appearance of an image displayed on the display 6. Importantly, the display settings are adjustable for particular individual areas of the display 6, in addition to being adjustable for the whole of the display 6. Display settings may include brightness, contrast and colour. Accordingly, for example, the brightness of a particular area of the display 6 may be increased, which results in a brighter image displayed in that particular area of the display 6.

In this example, the housing 3 partially surrounds the touch screen 2. The housing 3 also includes a push-button 8.

A data storage 9 is provided. The data storage 9 stores information on associations between each of the plurality of regions 7 of the input surface 5 and a particular corresponding area of the display 6. In this example, each of the plurality of regions 7 of the input surface 5 is associated with an immediately adjacent area of the display 6. To this end, as is shown in Figure 2, in this example, the cover 4, input surface 5 and display 6 are each approximately the same size, and the cover 4 almost exactly overlies the input surface 5, and the input surface 5 almost exactly overlies the display 6. Other layer configurations and associations are possible.

A controller 10, which may be a processor or the like, is provided within the housing 3 for controlling the operation of the electronic device 1. The controller 10 is connected to the input surface 5, the display 6 and the data storage 9. The controller 10 is configured to count the number of touches received by each of the plurality of regions 7 of the input surface 5. In an example, the controller 10 stores the count of the number of touches received by each of the plurality of regions 7 of the input surface 5 in the data storage 9. The controller 10 is also configured to adjust one or more display settings of the display 6, such as the brightness, colour and contrast of the display 6, in order to provide for a more readable display 6 when dirty or greasy fingerprints have been left on a particular area of the overlying cover 4 as a result of a user touching a particular area of the overlying input surface 5 with a dirty or greasy finger.

In particular, the controller 10 is configured to provide a first adjustment of the display settings of an area of the display 6 associated with a region of the input surface 5 that has received more touches than a first predetermined threshold count. The controller 10 may also be configured to provide a second adjustment of the display settings of an area of the display 6 associated with a region of the input surface 5 that has received more touches than a second predetermined threshold count. The second adjustment of the display settings is greater than the first adjustment. For example, the first adjustment may be a 20% increase in brightness and the second adjustment may be a 50% increase in brightness. Each of the first adjustment and the second adjustment may affect one or more display settings, such as the brightness, contrast and colour of one or more areas of the display 6.

In other examples, it will be understood that the controller 10 may be configurable to provide further adjustments of the display settings of an area of the display 6 associated with a region of the input surface 5 that has received more touches than further predetermined threshold counts. For example the controller 10 may be configured to provide a third adjustment of the display settings of an area of the display 6 associated with a region of the input surface 5 that has received more touches than a third predetermined threshold count.

In an example, the controller 10 may also be configured to reset the display settings for the whole of the display 6 back to their normal settings in response to detecting that a user appears to have cleaned dirty or greasy fingerprints from the cover 4. To this end, the controller 10 is configured to compare the proportion of the plurality of regions 7 of the input surface 5 that have received a touch from a user in a time period with a predetermined threshold proportion and a predetermined threshold time period. If the proportion of touched regions is lower than the predetermined threshold proportion then the controller 10 takes no further action in this regard. Similarly, if the proportion of touched regions is greater than the predetermined threshold proportion, but the time period in which the proportion of regions were touched is greater than the predetermined time period, the controller 10 also takes no further action in this regard. However, if the proportion of touched regions is greater than the predetermined threshold proportion and the time period in which the proportion of touched regions were touched is less than the predetermined time period, the controller 10 assumes that the touch screen 2 is being cleaned of fingerprint marks by a user (e.g. being wiped with a cloth). The controller 10 therefore resets the display settings of the display 6 back to their normal setting because the adjusted display settings are no longer required since the touch screen 2 has been cleaned of fingerprint marks. The controller 10 is also configured to reset the display settings of the display 6 back to their normal setting in response to instructions input by a user.

In an example, the predetermined threshold proportion is 90% and the predetermined threshold time period is 60 seconds. Therefore, if the controller senses that 90% of the plurality of regions 7 of the input surface 5 have been touched within 60 seconds, the controller resets the display settings of the display 6 back to their normal setting.

In an example, the controller 10 may also be configured to detect the pressure of a touch received by a region of the input surface 5 from a user. The controller 10 may also be configured to modify the extent of the first adjustment and/or the second adjustment and/or any further adjustments based on the detected pressure. The controller 10 may also be configured to modify the first predetermined threshold count and/or the second predetermined threshold count and/or any further predetermined threshold counts in response to the pressure of a touch by a user touching a region of the input surface 5. For example, if a user's touch is heavy then the controller 10 may increase the first adjustment, for example from a 20% brightness increase to a 25% brightness increase. Similarly, if a user's touch is light then the controller 10 may decrease the first adjustment, for example from a 20% brightness increase to a 10% brightness increase. Such modifications compensate for an increased greasy fingerprint effect due to a heavy touch by a user and a decreased greasy fingerprint effect due to a light touch by a user.

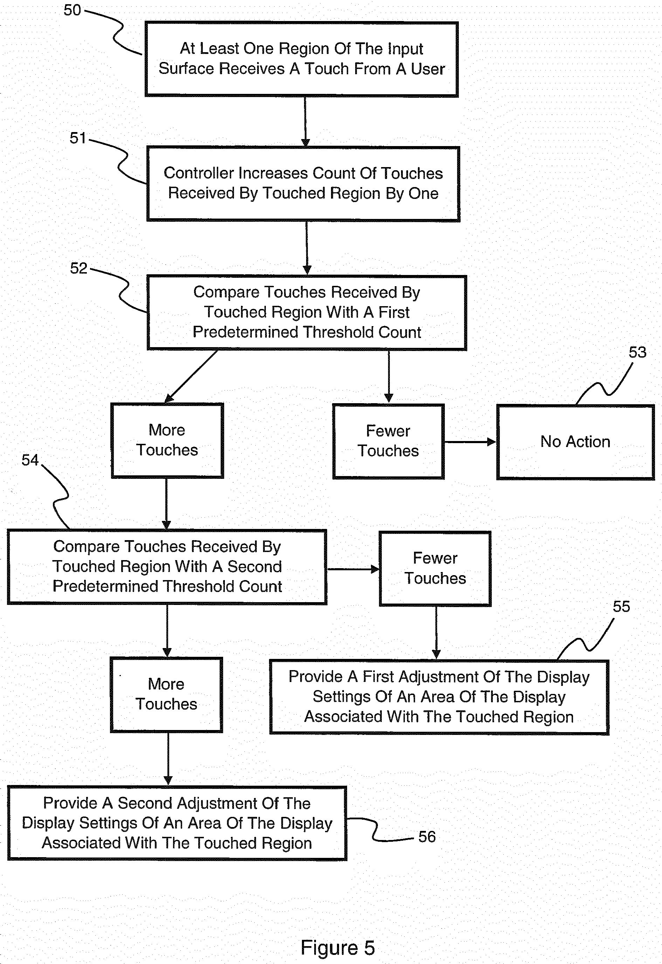

An example of a method of the controller 10 adjusting one or more display settings of areas of the display 6 is shown in Figures 1, 3 and 4, and will now be described with reference to Figure 5.

At 50, a user, who has decided to input a command into the touch screen 2, touches a region of the input surface 5 and leaves a greasy fingerprint mark 11 on the corresponding surface of the cover 4 (see Figure 1). The controller 10 counts the touches received by each of the plurality of regions 7 of the input surface 5. Consequently, at 51, the controller 10 detects that nine regions 12 of the plurality of regions 7 of the input surface 5 have been touched and therefore increases the total count of touches received by the nine touched regions 12 by one (see Figure 2).

At 52, the controller 10 compares the number of touches received by each of the touched regions 12 of the input surface 5 with a first predetermined threshold count. The first predetermined threshold count is factory set and may subsequently be adjusted by the user. If any of the touched regions 12 of the input surface 5 have received fewer touches than the first predetermined threshold count, at 53, the controller 10 takes no further action in regard to its count of the touches received by those touched regions 12.

However, if any of the touched regions 12 have received more touches than the first predetermined threshold count, at 54, the controller 10 then compares the number of touches received by those touched regions 12 with a second predetermined threshold count, which is greater than the first threshold count. The second predetermined threshold count is also factory set and may subsequently be adjusted by the user.

In the example shown in Figures 1, 3 and 4, the first predetermined threshold count is 0.5. Therefore, at 52, the controller 10 compares the count of touches received by each of the nine touched regions 12 of the input surface 5, one, with the first predetermined threshold count, 0.5, and determines that each of the touched regions 12 has received more touches than the first predetermined threshold count.

If any of the touched regions 12 of the input surface 5 have received fewer touches than the second predetermined threshold count, but more touches than the first predetermined threshold count, at 55, the controller 10 provides a first adjustment of the display settings of the area of the display associated with those touched regions 12.

If any of the touched regions 12 of the input surface 5 have received more touches than the second predetermined threshold count, at 56, the controller 10 provides a second adjustment of the display settings of the area of the display associated with those touched regions 12, the second adjustment being a greater adjustment of the display settings than the first adjustment.

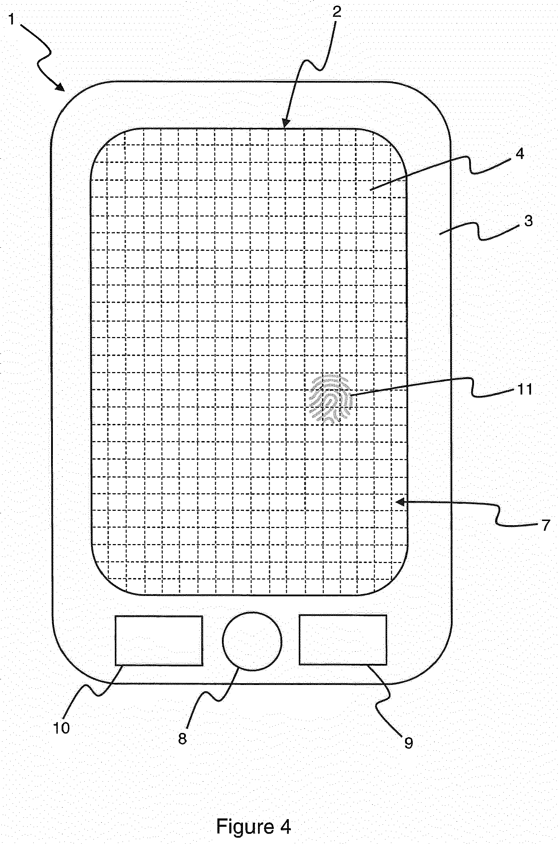

In the example shown in Figures 1, 3 and 4, the second predetermined threshold count is 1.5. Therefore, at 54, the controller 10 compares the count of touches received by each of the nine touched regions 12 of the input surface 5, one, with the second predetermined threshold count, 1.5, and determines that each of the touched regions 12 has received fewer touches than the second predetermined threshold count. In this example, the first adjustment of the display settings is a 20% increase in brightness and the second adjustment of the display settings is a 50% increase in brightness. Accordingly, since the controller 10 has determined that each of the nine touched regions 12 of the input surface 5 has received more touches than the first predetermined threshold count but fewer touches than the second predetermined threshold count, the controller provides the first adjustment of a 20% increase in brightness to the areas of the display 6 associated with (i.e. beneath) the nine touched regions 12 of the input surface 5. In Figure 4, the brightness of the areas of the display associated with the touched regions 12 has been increased, which has consequently reduced the visibility of the greasy fingerprint mark 11 on the cover 4.

An advantage of this arrangement is that if a user leaves a fingerprint mark on the touch screen 2, the controller 10 is able to adjust the display/graphics settings of the area of the display 6 beneath the fingerprint mark to compensate for the fingerprint mark. This makes the area of the display beneath the fingerprint mark more perceptible to a user. Consequently, this may allow for use of touch screens in locations, industries and environments where touch screen fingerprints marks are common, such as in restaurants etc., or in hot weather.

In addition, by determining exactly where the user has touched the touch screen 2, the above arrangement can change the display settings of areas of the display 6 beneath regions of the input surface 5 that have been touched more times than the predetermined threshold rather than for the whole display 6. This improves a user's experience because they may not be made aware that the display settings are being adjusted to compensate for fingerprint marks.

It will be understood that the processor or processing system or circuitry referred to herein may in practice be provided by a single chip or integrated circuit or plural chips or integrated circuits, optionally provided as a chipset, an application-specific integrated circuit (ASIC), field-programmable gate array (FPGA), digital signal processor (DSP), graphics processing units (GPUs), etc. The chip or chips may comprise circuitry (as well as possibly firmware) for embodying at least one or more of a data processor or processors and a digital signal processor or processors, which are configurable so as to operate in accordance with the exemplary embodiments. In this regard, the exemplary embodiments may be implemented at least in part by computer software stored in (non-transitory) memory and executable by the processor, or by hardware, or by a combination of tangibly stored software and hardware (and tangibly stored firmware).

Reference is made herein to data storage for storing data. This may be provided by a single device or by plural devices. Suitable devices include for example a hard disk and non-volatile semiconductor memory.

The examples described herein are to be understood as illustrative examples of embodiments of the invention. Further embodiments and examples are envisaged. Any feature described in relation to any one example or embodiment may be used alone or in combination with other features. In addition, any feature described in relation to any one example or embodiment may also be used in combination with one or more features of any other of the examples or embodiments, or any combination of any other of the examples or embodiments. Furthermore, equivalents and modifications not described herein may also be employed within the scope of the invention, which is defined in the claims.

## Claims

1. Apparatus for operating an electronic device, the apparatus comprising:
a touch screen comprising: a display for producing an image display; and an input surface for receiving touch input from a user, the display having adjustable display settings and the input surface being divided into a plurality of regions;
a data storage storing information on associations between each of the plurality of regions of the input surface and a particular area of the display; and
a controller configured to: count touches that at least one region of the input surface receives from a user; compare the touches that the at least one region of the input surface receives from a user with a predetermined threshold count; and, when the at least one region of the input surface has received more touches than the predetermined threshold count, provide an adjustment of the display settings of an area of the display associated with the at least one region of the input surface.

2. Apparatus according to claim 1, wherein the display settings comprise one or more of brightness, contrast and colour of the display screen.

3. Apparatus according to claim 1 or claim 2, wherein the controller is configured to: compare the touches that at least one region of the input surface receives from a user with a second predetermined threshold; and when the at least one region of the input surface has received more touches than the second predetermined threshold count, which is more than the first predetermined threshold count, provide a second adjustment of the display settings of an area of the display associated with the at least one region of the input surface.

4. Apparatus according to any claim 3, wherein the second adjustment provides a greater adjustment of the display settings compared to the first adjustment, relative to non-adjusted display settings.

5. Apparatus according to any preceding claim, wherein the controller is configured to: compare a proportion of the plurality of regions of the input surface that have been touched by a user in a time period with a predetermined threshold proportion and a predetermined threshold time period; and, when the proportion of the plurality of regions of the input surface that have been touched by a user is greater than the predetermined threshold proportion, and the time period is lower than the predetermined threshold time period, reset the display settings of the display to non-adjusted display settings.

6. Apparatus according to any preceding claim, wherein the controller is configured to: reset the display settings of the display to non-adjusted display settings in response to user input.

7. Apparatus according to any preceding claim, wherein the controller is configured to: detect the pressure of a touch received by at least one region of the input surface from a user; and modify the extent of the adjustment based on the detected pressure.

8. An electronic device comprising apparatus according to any preceding claim.

9. A method of operating an electronic device comprising a touch screen having a display for producing an image display and an input surface for receiving touch input from a user, the method comprising:
counting touches that at least one region of the input surface receives from a user;
comparing the touches that the at least one region of the input surface receives from a user with a predetermined threshold count; and
providing an adjustment of display settings of an area of the display associated with the at least one region of the input surface when the at least one region of the input surface has received more touches than the predetermined threshold count.

10. A method according to claim 9, wherein the display settings comprise one or more of brightness, contrast and colour of the display screen.

11. A method according to claim 9 or claim 10, comprising:
comparing the touches that at least one region of the input surface receives from a user with a second predetermined threshold; and
providing a second adjustment of the display settings of an area of the display associated with the at least one region of the input surface when the at least one region of the input surface has received more touches than the second predetermined threshold count, which is more than the first predetermined threshold count.

12. A method according to claim 11, wherein the second adjustment provides a greater adjustment of the display settings compared to the first adjustment, relative to non-adjusted display settings.

13. A method according to any of claims 9 to 12, comprising:
comparing a proportion of a plurality of regions of the input surface that have been touched by a user in a time period with a predetermined threshold proportion and a predetermined threshold time period; and
resetting the display settings of the display to non-adjusted display settings when the proportion of the plurality of regions of the input surface that have been touched by a user is greater than the predetermined threshold proportion, and the time period is lower than the predetermined threshold time period.

14. A method according to any of claims 9 to 13, comprising:
resetting the display settings of the display to non-adjusted display settings in response to user input.

15. A method according to any of claims 9 to 14, comprising:
detecting the pressure of a touch received by at least one region of the input surface from a user; and
modifying the extent of the adjustment based on the detected pressure.
